# EUROPEAN PATENT APPLICATION

(11) **EP 4 385 874 A1**
(43) Date of publication of application: **19.06.2024**
(21) Application number: 23209381.5
(22) Date of filing: 13.11.2023
(51) Int. Cl.: B62M 1/36, B62M 3/06

(54) **BICYCLE POWER TRANSMISSION DEVICE**

(30) Priority: 12.12.2022 JP 2022198151
(71) Applicant: Exedy Corporation, Neyagawa-shi, Osaka 572-8570 (JP)
(72) Inventor: KAWAHARA, Yuki, Osaka, 572-8570 (JP); HARIMA, Kenji, Osaka, 572-8570 (JP)
(74) Representative: KASTEL Patentanwälte PartG mbB

(57) **Abstract**

It is intended to provide a bicycle power transmission device suitable for a user. The present bicycle power transmission device (100) includes a first rotor (2), a pair of second rotors (3), an elastic member (4), and a stopper member (5). The pair of second rotors (3) is disposed to interpose the first rotor (2) therebetween in an axial direction. The pair of second rotors (3) is attached to each other so as to be detachable from each other. The elastic member (4) elastically couples the first rotor (2) and the pair of second rotors (3). The stopper member (5) is disposed between the pair of second rotors (3). The first rotor (2) includes a stopper surface opposed to the stopper member (5) at an interval in a rotational direction.

## Description

### CROSS-REFERENCE TO RELATED APPLICATIONS

This application is based on and claims the priority benefit of Japanese application 2022-198151 filed on December 12, 2022, the contents of which are incorporated herein by reference.

### TECHNICAL FIELD

The present invention relates to a bicycle power transmission device.

### BACKGROUND

There has been disclosed a type of bicycle power transmission device configured to be capable of widening a torsion angle, i.e., an angle of torsion (relative rotation) between an input plate and an output plate. For example, Japan Laid-open Patent Application Publication No. 2020-059347 discloses a power transmission device that a pair of output plates are disposed to interpose an input plate therebetween in an axial direction. Besides, elastic members elastically couple the input plate and the pair output plates. Furthermore, fixation pins, provided for coupling the pair of output plates, contact with end portions of stopper holes, respectively, whereby relative rotation between the input plate and the pair of first and second output plates is restricted to a predetermined angular range.

It is an object of the present invention to provide a bicycle power transmission device suitable for a user.

### SUMMARY OF THE INVENTION

A bicycle power transmission device according to a first aspect includes a first rotor, a pair of second rotors, an elastic member, and a stopper member. The first rotor is disposed to be rotatable. The pair of second rotors is disposed to interpose the first rotor therebetween in an axial direction. The pair of second rotors is attached to each other so as to be detachable from each other. The elastic member elastically couples the first rotor and the pair of second rotors. The stopper member is attached to the pair of second rotors so as to be disposed therebetween. The first rotor includes a stopper surface opposed to the stopper member at an interval in a rotational direction.

According to this configuration, a user is enabled to detach the pair of second rotors from each other and then to, for instance, replace the stopper member and/or the elastic member by a desired type of stopper member and/or a desired type of elastic member. As a result, the bicycle power transmission device can be made suitable for the user.

A bicycle power transmission device according to a second aspect relates to the bicycle power transmission device according to the first aspect, and further includes a plurality of bolts. The plurality of bolts are configured to attach the pair of second rotors to each other so as to make the pair of second rotors detachable from each other. The stopper member includes a through hole penetrating therethrough in the axial direction. Each of the plurality of bolts extends to penetrate the through hole.

A bicycle power transmission device according to a third aspect relates to the bicycle power transmission device according to the first or second aspect, and further includes a sprocket part and a crank arm. The sprocket part is provided on one of the pair of second rotors. The crank arm is configured to be unitarily rotated with the first rotor.

A bicycle power transmission device according to a fourth aspect relates to the bicycle power transmission device according to the third aspect and is configured as follows. The first rotor includes a hub portion, an outer flanged portion, and an inner flanged portion. The hub portion extends in the axial direction. The hub portion has a tubular shape. The outer flanged portion extends radially outward from the hub portion. The inner flanged portion extends radially inward from the hub portion. The crank arm is attached to the inner flanged portion.

A bicycle power transmission device according to a fifth aspect relates to the bicycle power transmission device according to the fourth aspect and is configured as follows. The crank arm is spline-coupled to the inner flanged portion.

A bicycle power transmission device according to a sixth aspect relates to the bicycle power transmission device according to the fourth or fifth aspect and is configured as follows. The crank arm includes an arm body and an attachment portion. The arm body extends in a radial direction. The attachment portion extends from an end of the arm body in the axial direction. The attachment portion penetrates inside the inner flanged portion. The attachment portion is swaged at a distal end thereof to the inner flanged portion.

A bicycle power transmission device according to a seventh aspect relates to the bicycle power transmission device according to any of the first to sixth aspects and is configured as follows. The stopper member is attached to the pair of second rotors so as to be replaceable by another stopper member.

A bicycle power transmission device according to a eighth aspect relates to the bicycle power transmission device according to any of the first to seventh aspects and is configured as follows. The stopper member is selected from a plurality of types of stopper members different in circumferential dimension from each other.

Overall, according to the present invention, it is made possible to provide a bicycle power transmission device suitable for a user.

### BRIEF DESCRIPTION OF THE DRAWINGS

FIG. 1 is a cross-sectional view of a power transmission device.
FIG. 2 is a front view of the power transmission device.
FIG. 3 is a cross-sectional view of a power transmission device according to a modification.
FIG. 4 is a front view of a power transmission device according to another modification.

### DETAILED DESCRIPTION

A bicycle power transmission device (hereinafter simply referred to as "power transmission device" on an as-needed basis) according to the present preferred embodiment will be hereinafter explained with reference to drawings. It should be noted that in the following explanation, the term "axial direction" refers to an extending direction of a rotational axis O of the power transmission device. On the other hand, the term "circumferential direction" refers to a circumferential direction of an imaginary circle about the rotational axis O, whereas the term "radial direction" refers to a radial direction of the imaginary circle about the rotational axis O. Yet on the other hand, the term "rotational direction" refers to a direction in which the power transmission device is rotated in traveling of a bicycle.

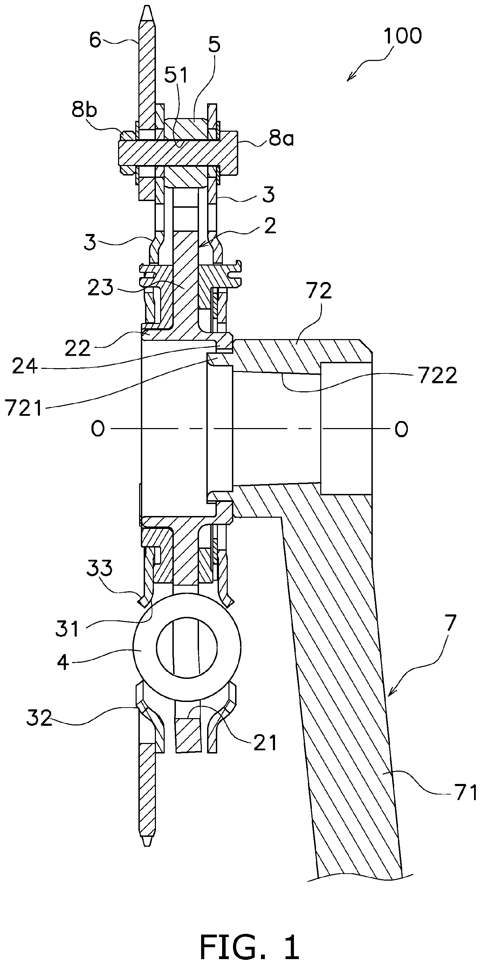

FIG. 1 is a cross-sectional view of a power transmission device 100. As shown in FIG. 1, the power transmission device 100 includes a first rotor 2, a pair of second rotors 3, a plurality of elastic members 4, a plurality of stopper members 5, a sprocket part 6, a crank arm 7, a plurality of bolts 8a, and a plurality of nuts 8b. The power transmission device 100 is disposed to be rotatable about the rotational axis O.

The power transmission device 100 is installed in a bicycle. For example, the power transmission device 100 is installed in a type of bicycle driven only by a human power without including an electric motor or so forth. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

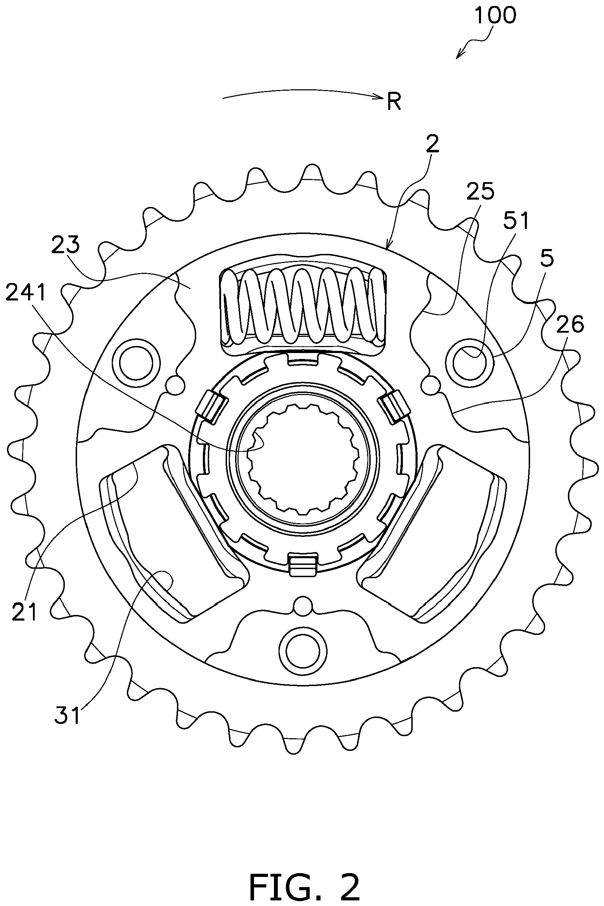

FIG. 2 is a front view of the power transmission device 100 from which some of the elastic members 4, the crank arm 7, and one of the pair of second rotors 3 are detached. As shown in FIG. 2, the power transmission device 100 is configured to be rotated in a rotational direction R (clockwise in FIG. 2).

### <First Rotor>

As shown in FIGS. 1 and 2, the first rotor 2 includes a plurality of first accommodation portions 21. It should be noted that in the present preferred embodiment, the first rotor 2 includes three first accommodation portions 21. The first accommodation portions 21 penetrate the first rotor 2 in the axial direction. The first accommodation portions 21 are disposed at intervals in the circumferential direction. The first accommodation portions 21 are disposed at equal intervals.

The first rotor 2 is disposed to be rotatable in the rotational direction R. The first rotor 2 is a member to which the torque is inputted from the crank arm 7. The first rotor 2 is configured to be unitarily rotated with the crank arm 7.

The first rotor 2 includes a hub portion 22, an outer flanged portion 23, and an inner flanged portion 24. The hub portion 22 is made in shape of a cylinder extending in the axial direction. When the power transmission device 100 is installed in the bicycle, a crankshaft (omitted in illustration) extends inside the hub portion 22.

The outer flanged portion 23 extends radially outward from the hub portion 22. The outer flanged portion 23 is provided with the first accommodation portions 21. The outer flanged portion 23 is provided on the axial middle of the hub portion 22.

The inner flanged portion 24 extends radially inward from the hub portion 22. The inner flanged portion 24 includes a spline hole 241 on the inner peripheral surface thereof. The inner flanged portion 24 is provided on one of the axial ends of the hub portion 22. The inner flanged portion 24 is different in axial position from the outer flanged portion 23. In other words, the inner flanged portion 24 does not overlap with the outer flanged portion 23 in a radial view.

The first rotor 2 includes a plurality of stopper surfaces 25. When described in detail, the first rotor 2 includes a plurality of cutout portions 26. The cutout portions 26 are disposed at intervals in the circumferential direction. Each cutout portion 26 is disposed between each adjacent pair of first accommodation portions 21 in the circumferential direction. Each cutout portion 26 is opened radially outward. Among inner wall surfaces by which each cutout portion 26 is defined, a surface facing the rotational direction R serves as each stopper surface 25.

Each stopper surface 25 faces the rotational direction R. Each stopper surface 25 is opposed to each stopper member 5 at an interval in the rotational direction.

The first rotor 2 can be made of, for instance, iron, stainless steel, carbon fiber reinforced plastics (CFRP), or so forth.

### <Second Rotor>

The pair of second rotors 3 is disposed to be rotatable in the rotational direction R. The pair of second rotors 3 is disposed to be rotatable relative to the first rotor 2.

The pair of second rotors 3 is substantially identical in configuration to each other; hence, detailed explanation will be hereinafter made for one of the pair of second rotors 3 but will be omitted for the other.

The pair of second rotors 3 is disposed away from each other at an interval in the axial direction. The first rotor 2 is disposed between the pair of second rotors 3. In other words, the pair of second rotors 3 is disposed to interpose the first rotor 2 therebetween in the axial direction. When described in detail, the outer flanged portion 23 of the first rotor 2 is disposed between the pair of second rotors 3 in the axial direction.

The pair of second rotors 3 is attached to each other by the plural bolts 8a and the plural nuts 8b so as to be detachable from each other. Because of this, the pair of second rotors 3 is unitarily rotated with each other.

The bolts 8a are configured to attach the pair of second rotors 3 to each other so as to make the pair of second rotors 3 detachable from each other. Specifically, each bolt 8a is screwed into each nut 8b, while penetrating each of holes provided in each of the pair of second rotors 3 in the axial direction. When each bolt 8a is unscrewed from each nut 8b, the pair of second rotors 3 is made detachable from each other. Then, when each bolt 8a is screwed into each nut 8b, the pair of second rotors 3, detached from each other, is again made easily attachable to each other.

The stopper members 5 are disposed between the pair of second rotors 3 in the axial direction. The stopper members 5 are disposed in the cutout portions 26 of the first rotor 2, respectively. The stopper members 5 are attached to the pair of second rotors 3 so as to be unitarily rotated therewith.

When a torsion angle, i.e., an angle of torsion (relative rotation) between the first rotor 2 and the pair of second rotors 3, reaches a predetermined angle in traveling of the bicycle, the stopper surfaces 25 contact with the stopper members 5, respectively. Thus, when the stopper members 5 contact with the stopper surfaces 25, respectively, the first rotor 2 is restricted from rotating relative to the pair of second rotors 3 any further from the position. In other words, the first rotor 2 is rotated relative to the pair of second rotors 3 until the stopper members 5 contact with the stopper surfaces 25, respectively. Then, the first rotor 2 is unitarily rotated with the pair of second rotors 3 after the stopper members 5 contact with the stopper surfaces 25, respectively. It should be noted that the torsion angle between the first rotor 2 and the pair of second rotors 3 is maximized (hereinafter referred to as "maximum torsion angle") when the stopper surfaces 25 contact with the stopper members 5, respectively. It should be also noted that the torsion angle between the first rotor 2 and the pair of second rotors 3 is 0 degrees when the torque is not being inputted to the power transmission device 100.

The stopper members 5 are attached to the pair of second rotors 3 so as to be replaceable by any suitable type of stopper members. Specifically, each stopper member 5 includes a through hole 51 penetrating therethrough in the axial direction. Each bolt 8a extends to penetrate inside the through hole 51 of each stopper member 5. When each bolt 8a is unscrewed from each nut 8b and is detached from the pair of second rotors 3 and each stopper member 5 and then one of the pair of second rotors 3 is detached from the other, each stopper member 5 is made replaceable by another stopper member. It should be noted that a type of stopper members is selectable as the stopper members 5 used in the power transmission device 100 from, for instance, a plurality of types of stopper members different in circumferential dimension from each other. When described in detail, a type of stopper members is selectable as the stopper members 5 from a plurality of types of stopper members different in outer diameter from each other. When each stopper member 5 is replaced by another stopper member as described above, a distance between each stopper surface 25 and each stopper member 5 is changed, whereby the maximum torsion angle between the first rotor 2 and the pair of second rotors 3 can be changed.

The second rotor 3 has a disc shape and includes a through hole in a middle part thereof. The hub portion 22 of the first rotor 2 extends inside the through hole of the second rotor 3 in the axial direction.

The second rotor 3 includes a plurality of second accommodation portions 31. It should be noted that in the present preferred embodiment, the second rotor 3 includes three second accommodation portions 31. The second accommodation portions 31 are disposed at intervals in the circumferential direction.

Each second accommodation portion 31 penetrates the second rotor 3 in the axial direction. Each second accommodation portion 31 extends in the circumferential direction. The second accommodation portions 31 are substantially disposed on an identical imaginary circle. The second accommodation portions 31 are disposed to be axially opposed to the first accommodation portions 21, respectively. Put differently, in an axial view, the second accommodation portions 31 are disposed to overlap with the first accommodation portions 21, respectively.

The second rotor 3 includes first cut-and-raised portions 32 and second cut-and-raised portions 33. The first and second cut-and-raised portions 32 and 33 are formed by cutting and raising the second rotor 3 in part.

Each first cut-and-raised portion 32 is disposed radially outside each elastic member 4. Each second cut-and-raised portion 33 is disposed radially inside each elastic member 4. Each pair of first and second cut-and-raised portions 32 and 33 is configured to restrict axial movement of each elastic member 4.

The second rotor 3 can be made of, for instance, iron, stainless steel, carbon fiber reinforced plastics (CFRP), or so forth.

The sprocket part 6 is provided on one of the pair of second rotors 3. For example, the sprocket part 6 is provided as a member separated from the one of the pair of second rotors 3 and is attached to the one of the pair of second rotors 3 by the bolts 8a and the nuts 8b. The sprocket part 6 is unitarily rotated with the pair of second rotors 3. The sprocket part 6 includes a plurality of teeth on the outer peripheral end thereof. A chain (omitted in illustration) is wrapped around the sprocket part 6, whereby the torque is transmitted from the sprocket part 6 to the drive wheel (omitted in illustration) through the chain and so forth.

### <Elastic Members>

Each of the elastic members 4 is accommodated in each first accommodation portion 21 and each pair of second accommodation portions 31. The elastic members 4 are, for instance, coil springs. The elastic members 4 elastically couple the first rotor 2 and the pair of second rotors 3 in the rotational direction. In other words, the torque, outputted from the first rotor 2, is transmitted to the pair of second rotors 3 through the elastic members 4. Besides, the elastic members 4 are rotated together with the first rotor 2 and the pair of second rotors 3. When the torque is transmitted, the elastic members 4 are compressed, whereby torsion (relative rotation) is caused between the first rotor 2 and the pair of second rotors 3. When the elastic members 4 are not being compressed, torsion is not caused between the first rotor 2 and the pair of second rotors 3; hence, the torsion angle is 0 degrees.

### <Crank arm>

The crank arm 7 is configured to be unitarily rotated with the first rotor 2. In other words, the crank arm 7 is disposed to be rotatable about the rotational axis O. The crank arm 7 is attached to the inner flanged portion 24 of the first rotor 2. When described in detail, the crank arm 7 is configured to be spline-coupled to the inner flanged portion 24.

The crank arm 7 includes an arm body 71 and an attachment portion 72. The arm body 71 extends in a radial direction. The attachment portion 72 extends from one of both ends of the arm body 71 in the axial direction. It should be noted that the pedal (omitted in illustration) is attached to the other of both ends of the arm body 71.

The outer diameter of the attachment portion 72 is lesser in a distal end 721 than in the remaining part thereof. The distal end 721 is spline-coupled to the inner flanged portion 24. Besides, the distal end 721 penetrates the inner flanged portion 24 in the axial direction. Then, the distal end 721 is fixed to the inner flanged portion 24 by swaging. When described in detail, the distal end 721 and the inner flanged portion 24 are firmly attached to each other by swaging of the distal end 721. Moreover, a part of the distal end 721, protruding from the inner flanged portion 24, is enlarged in outer diameter by swaging; namely, the outer diameter of the protruding part is made greater than the inner diameter of the inner flanged portion 24. As a result, the distal end 721 is prevented from being detached from the inner flanged portion 24; hence, the crank arm 7 and the first rotor 2 can be prevented from moving away from each other to the opposite sides in the axial direction.

The attachment portion 72 includes an attachment hole 722. The attachment hole 722 has a rectangular shape in the axial view. The crankshaft (omitted in illustration) is fitted to the attachment hole 722, whereby the crank arm 7 is unitarily rotated with the crankshaft.

### <Action>

The action of the power transmission device 100 configured as described above will be explained. First, when a torque is inputted to the first rotor 2 through the crank arm 7 by pedaling of a user, the first rotor 2 is rotated in the rotational direction R. Then, the torque is transmitted from the first rotor 2 to the pair of second rotors 3 through the elastic members 4. As a result, the pair of second rotors 3 is rotated in the rotational direction R, whereby the torque is transmitted to the drive wheel.

Here, when the torsion angle between the first rotor 2 and the pair of second rotors 3 reaches a predetermined angle by compression of the elastic members 4, the stopper surfaces 25 contact with the stopper members 5, respectively. As a result, the first rotor 2 and the pair of second rotors 3 are unitarily rotated. The maximum torsion angle can be changed by replacement of the stopper members 5. For example, when the stopper members 5 are replaced by a type of stopper members having a greater outer diameter than the stopper members 5, the maximum torsion angle can be made small. Contrarily, when the stopper members 5 are replaced by another type of stopper members having a lesser outer diameter than the stopper members 5, the maximum torsion angle can be made large. It should be noted that in the power transmission device 100, the torsion angle is configured to be maximized before the elastic members 4 are fully compressed.

Each elastic member 4 is preferably set to have a spring constant, by which the torsion angle between the first rotor 2 and the pair of second rotors 3 is maximized when a torque of 100 N·m or less is inputted to the first rotor 2. Besides, each elastic member 4 is preferably set to have a spring constant, by which the torsion angle between the first rotor 2 and the pair of second rotors 3 is maximized when a torque of 20 N·m or greater is inputted to the first rotor 2. It should be noted that the torque, inputted to the first rotor 2 when the torsion angle is maximized, will be referred to as "maximum torque". Now, a variety of types of elastic members are prepared as options for the elastic members 4. For example, the variety of types of elastic members are set to be different in spring constant from each other so as to maximize the torsion angle when the magnitude (N m) of the maximum torque is approximately each of the following values (albeit not particularly limited thereto): 90, 80, 70, 60, 50, 40, and 30. Then, any of the variety of types of elastic members may be configured to be arbitrarily selected by the user as the elastic members 4.

### [Modifications]

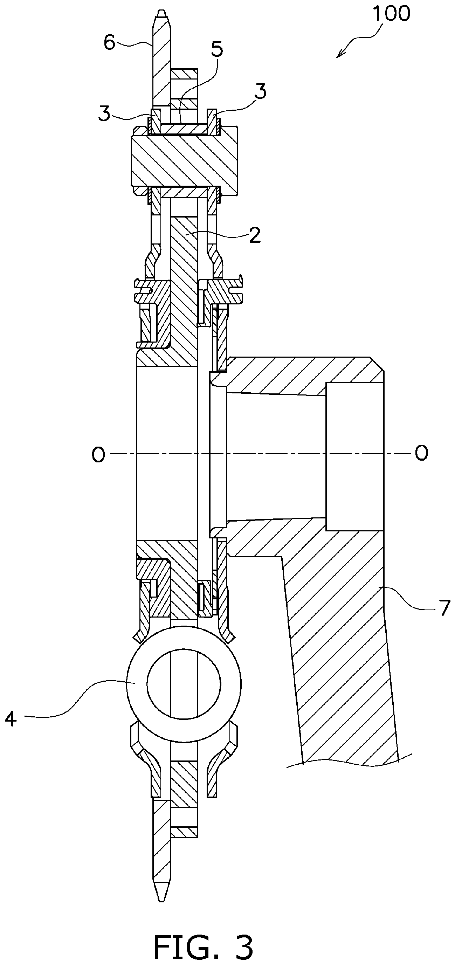

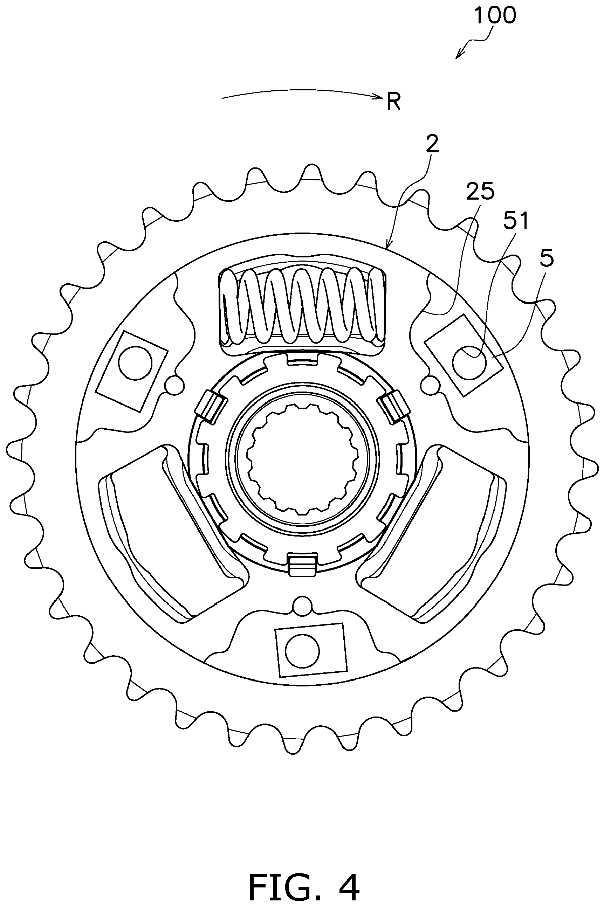

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the crank arm 7 is attached to the first rotor 2, whereas the sprocket 6 is provided for one of the pair of second rotors 3; however, the power transmission device 100 is not limited in configuration to this. For example, as shown in FIG. 3, the crank arm 7 may be attached to one of the pair of second rotors 3, whereas the sprocket part 6 may be provided for the first rotor 2.
(b) In the preferred embodiment described above, the sprocket part 6 is provided as a member separated from one of the pair of second rotors 3; however, the sprocket part 6 is not limited in configuration to this. For example, the sprocket part 6 may be provided on one of the pair of second rotors 3 so as to be integrated with the outer peripheral end thereof. In other words, the sprocket part 6 may compose a single member together with one of the pair of second rotors 3. When described in detail, one of the pair of second rotors 3 may be provided with a plurality of teeth on the outer peripheral end thereof such that the outer peripheral end provided with the teeth serves as the sprocket part 6.
(c) In the preferred embodiment described above, each stopper member 5 includes the through hole 51 penetrated by each bolt 8a; however, each stopper member 5 is not limited in configuration to this. For example, each stopper member 5 may include a pair of screw holes perforated on a one-to-one basis in both surfaces thereof facing the opposite sides in the axial direction. Then, a pair of bolts 8a may be screwed into the pair of screw holes of each stopper member 5 from the axially opposite sides so as to fix the pair of second rotors 3 and each stopper member 5 to each other. It should be noted that the screw holes may be connected to each other so as to be made in form of a single screw hole.
(d) As shown in FIG. 4, each stopper member 5 may have a rectangular shape in an axial view. In this case, the distance between each stopper surface 25 and each stopper member 5 can be changed by replacing the stopper members 5 by any of a variety of types of stopper members that are different in circumferential dimension from each other and are prepared as options for the stopper members 5.

### LIST OF REFERENCE NUMERALS

2: First rotor, 22: Hub portion, 23: Outer flanged portion, 24: Inner flanged portion, 25: Stopper surface, 3: Second rotor, 4: Elastic member, 5: Stopper member, 51: Through hole, 6: Sprocket part, 7: Crank arm, 71: Arm body, 72: Attachment portion, 721: Distal end, 8a: Bolt, 100: Power transmission device

## Claims

1. A bicycle power transmission device comprising:
a first rotor disposed to be rotatable;
a pair of second rotors disposed to interpose the first rotor therebetween in an axial direction, the pair of second rotors attached to each other so as to be detachable from each other;
an elastic member elastically coupling the first rotor and the pair of second rotors; and
a stopper member attached to the pair of second rotors so as to be disposed therebetween, wherein
the first rotor includes a stopper surface opposed to the stopper member at an interval in a rotational direction.

2. The bicycle power transmission device according to claim 1, further comprising:
a plurality of bolts configured to attach the pair of second rotors to each other so as to make the pair of second rotors detachable from each other, wherein
the stopper member includes a through hole penetrating therethrough in the axial direction, and
each of the plurality of bolts extends to penetrate the through hole.

3. The bicycle power transmission device according to claim 1, further comprising:
a sprocket part provided on one of the pair of second rotors; and
a crank arm configured to be unitarily rotated with the first rotor.

4. The bicycle power transmission device according to claim 3, wherein
the first rotor includes a hub portion, an outer flanged portion, and an inner flanged portion, the hub portion extending in the axial direction, the outer flanged portion extending radially outward from the hub portion, the inner flanged portion extending radially inward from the hub portion, and
the crank arm is attached to the inner flanged portion.

5. The bicycle power transmission device according to claim 4, wherein the crank arm is spline-coupled to the inner flanged portion.

6. The bicycle power transmission device according to claim 4 or 5, wherein
the crank arm includes an arm body and an attachment portion, the arm body extending in a radial direction, the attachment portion extending from an end of the arm body in the axial direction, and
the attachment portion penetrates inside the inner flanged portion, the attachment portion swaged at a distal end thereof to the inner flanged portion.

7. The bicycle power transmission device according to claim 1, wherein the stopper member is attached to the pair of second rotors so as to be replaceable by another stopper member.

8. The bicycle power transmission device according to claim 1, wherein the stopper member is selected from a plurality of types of stopper members different in circumferential dimension from each other.
